Europäisches Patentamt

European Patent Office

Office européen des brevets

(19)

(11) EP 0 813 094 A2

(12) **EUROPEAN PATENT APPLICATION**

(43) Date of publication:
17.12.1997 Bulletin 1997/51

(51) Int Cl.6: **G02F 1/1335**, G02F 1/1333, G02F 1/1343

(21) Application number: 97304159.3

(22) Date of filing: 13.06.1997

(84) Designated Contracting States:
AT BE CH DE DK ES FI FR GB GR IE IT LI LU MC NL PT SE

(30) Priority: 13.06.1996 JP 152647/96

(71) Applicant: SEIKO INSTRUMENTS INC.
Chiba-shi, Chiba 261 (JP)

(72) Inventors:
• Fukuchi, Takakazu
Mihama-ku, Chiba-shi, Chiba (JP)

• Motte, Shunichi
Mihama-ku, Chiba-shi, Chiba (JP)
• Yamazaki, Osamu
Mihama-ku, Chiba-shi, Chiba (JP)
• Yamamoto, Shubei c/o Seiko Instruments Inc.,
Chiba-shi, Chiba, (JP)

(74) Representative: Sturt, Clifford Mark et al
J. MILLER & CO.
34 Bedford Row,
Holborn
London WC1R 4JH (GB)

(54) **Reflection-type liquid crystal display device**

(57)     The invention provides a reflection-type liquid crystal display device with improved display quality by eliminating the double image phenomenon and providing a bright display screen. Display electrodes 2a also serving as a reflection plate and a pattern 2b in a non-driving display region are formed on the surface of a transparent substrate 1 with a metal such as aluminium, to form a reflection substrate. A polymer dispersed liquid crystal 5 is provided between the reflection substrate and another, opposed transparent substrate 1 on which a transparent conductive film 3 is formed. As a result, a reflection-type liquid crystal display device which is inexpensive, very bright, and free of the double image phenomenon can be relaxed.

FIG. 1

**Description**

The present invention relates to liquid crystal display devices and, more specifically, to a reflection-type liquid crystal display device which performs display by having incident light reflected by a reflection plate.

In contrast to the transmission-type liquid crystal display device (hereinafter referred to as "transmission-type LCD"), the reflection-type liquid crystal display device (hereinafter referred to as "reflection-type LCD") does not have any light source in the device itself. Therefore, in the reflection-type LCD, the display performance of brightness is determined by how efficiently light received from the environment is used. In the TN (twisted nematic) LCD and the STN (super-twisted nematic) LCD, which are commonly used as display devices of wrist watches, pocket calculators, electronic dictionaries, etc., polarising plates and a reflection plate are bonded to top and bottom substrates of a liquid crystal cell. Due to the use of the polarising plates, light that reaches a display screen is as weak as about a half of incident light

To solve this problem, in the STN-LCD, attempts have been made to increase the brightness by using only one polarising plate. This is realised by adjusting $\Delta$nd (retardation) of a liquid crystal and a phase film, the angle of the optic axis, the angle of a polarising plate, and other parameters. However, these attempts are still insufficient in terms of improvement in brightness.

In recent years, a new display scheme of polymer dispersed liquid crystal display has been developed which does not require any polarising plate. A typical example is the polymer network liquid crystal (hereinafter referred to as "PN-LC") display scheme. This is a display scheme (hereinafter referred to as "PN-LCD") using a new liquid crystal material subjecting, to mixing and dispersion, an ordinary TN liquid crystal and a polymeric resin that polymerises through a crosslinking reaction upon illumination with ultraviolet (UV) light.

In the PN-LC, when a TN liquid crystal and a UV polymerisation polymeric resin are mixed at a proper proportion and subjected to dispersion, the polymer forms a network upon illumination with UV light and, at the same time, the TN liquid crystal is uniformly dispersed in the network. As a result, the PN-LC assumes a property reflecting functions of both of the polymer and the TN liquid crystal. The PN-LCD provides a light-scattering mode display element which scatters incident light by utilising a difference in refractive index between the polymer and the TN liquid crystal. The PN-LCD not only makes polarising plates used in the conventional TN-LCD unnecessary but also requires no alignment film, which means very small optical loss. Therefore, the PN-LCD enables bright display. Further, because of a simplified manufacturing process, the PN-LCD has another advantage of price reduction.

Another display scheme similar to the PN-LC has been developed in which a liquid crystal is sealed in polymer microcapsules in advance. It is said that this scheme provides the same advantages as the PN-LC.

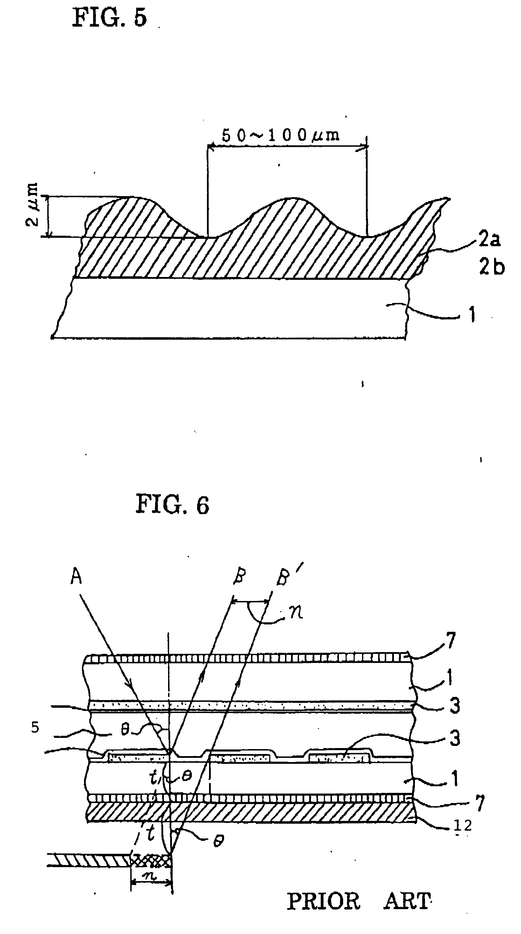

In the above-mentioned conventional reflection-type liquid crystal display device using polarising plates, as shown in Fig. 6, polarising plates 7 are disposed outside respective transparent substrates 1 between which a liquid crystal layer 5 is interposed. A reflection plate 12 is provided on one of the polarising plates 7. Since incident light passes through each of the two, i.e., top and bottom, polarising plates 7 two times, reflection light that is finally obtained is greatly attenuated in intensity. Therefore, the display screen is dark and the display quality is insufficient.

Further, as indicated by symbols B and B' in Fig. 6, this type of display device necessarily suffers from a "double image phenomenon" in which an image formed by transparent electrodes 3 is viewed as a double image because of scattering light B which comes out of the device after incident light A is scattered by the surface of the transparent electrodes 3 and reflection light B' which comes out of the device after the incident light A is reflected by the reflection plate 12. Various attempts have been made to solve a problem of deterioration in display quality due to the double image phenomenon, an example of which is making the transparent substrate 1 on the side of the reflection plate 12 thinner. However, improvements by these attempts are still insufficient and even at the present time the double image phenomenon remains problematic.

The PN-LCD, which has been proposed to solve the drawback of dark display of the TN-LCD and the STN-LCD which employ a polarising plate(s), provides a configuration obtained by removing the polarising plates 7 from the Fig. 6 configuration. Although the PN-LCD enables display that is brighter by a degree corresponding to the elimination of the two polarising plates 7, the problem of deterioration in display quality due to the double image phenomenon remains as in the case of the device using polarising plates.

An object of the present invention is to provide a reflection-type liquid crystal display device which provides improved display quality by eliminating a double image appearing on a display screen and making the display screen brighter.

In a first aspect, this invention provides a reflection-type liquid crystal display device comprising:

a transparent substrate;
a transparent electrode formed on the transparent substrate;
an opposed substrate opposed to the transparent substrate, and characterised by further comprising;
electrodes also serving as a reflection plate formed on the opposed substrate in a driving display region;

an electrode member irrelevant to a display operation and made of the same material as the electrodes, the electrode member being formed on the opposed substrate on the same plane as the electrodes in part of a display region excluding the driving display region so as to be discontinuous with the electrodes; and

a polymer dispersed liquid crystal interposed and held between the transparent substrate and the opposed substrate.

In a second aspect, this invention provides a reflection-type liquid crystal display device comprising:

a transparent substrate;
a transparent electrode formed on the transparent substrate;
a second substrate opposed to the transparent substrate;
a sealing member for holding the transparent substrate and the second substrate so as to produce a space in between;
a liquid crystal filling the space, and characterised by further comprising;
display electrodes constituting display pixels and having a reflecting function; and
a non-display electrode not constituting the display pixels and having a reflecting function, the non-display electrode being formed on the second substrate in a region inside the sealing member where the display electrodes are not formed, so as not to be electrically connected to the display electrodes.

Thus, to attain the above object, according to the invention, in a reflection-type liquid crystal display device which displays an image by reflection light with a configuration including a pair of transparent substrates having respective conductive thin-film patterns, a liquid crystal interposed between the pair of transparent substrates, and a reflection plate provided on one of the transparent substrates, a reflection plate pattern is formed substantially over the entire inner surface of one of the transparent substrates which surface is adjacent to the liquid crystal.

In particular, a reflection plate pattern in a driving display region and that in a non-driving display region are formed over the entire surface so as to be separated from and independent of each other. By forming the reflection plate patterns with a low-resistivity metal material, they can also serve as electrodes. Producing varied reflection light by forming asperities on the metal surface also belongs to the invention. A polymer dispersed liquid crystal which requires no polarising plate and therefore can provide bright display is injected into the above-configured reflection-type cell.

Embodiments of the invention will now be described, by way of example only, with reference to the accompanying diagrammatic figures, in which;

Fig. 1 is a sectional view of a reflection-type liquid crystal display device according to a first embodiment of the present invention;
Fig. 2 is a schematic front view of reflection plate patterns used in the display device of Fig. 1;
Fig. 3 is a sectional view of a reflection-type liquid crystal display device according to a second embodiment of the invention;
Fig. 4 is a schematic front view of reflection plate patterns used in the display device of Fig. 3;
Fig. 5 is a schematic sectional view showing a surface shape of the reflection plate patterns of Fig. 4; and
Fig. 6 is a schematic sectional view of a conventional reflection-type liquid crystal display device.

In general, if a metal film is used as a reflection plate, the metal surface provides very strong back scattering, whereby a bright display screen can be obtained. Among metal materials, silver exhibits the most strong back scattering which amounts to about 98% in the visible range. Other metals that exhibit considerably strong back scattering include aluminium, platinum, cobalt, palladium, and rhodium. Gold, nickel, chromium, and other metals have metallic, glossy colours of their own. If the surface of such a metal as aluminium or nickel is oxidised to change its surface state, the specular reflection light is decreased and its own metallic colour including scattered light is obtained.

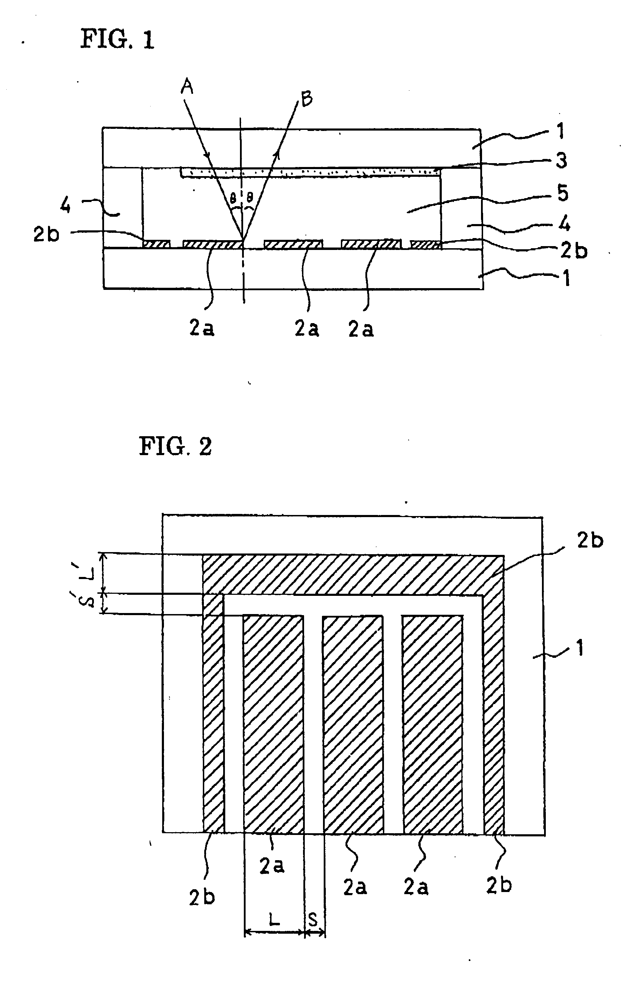

Referring to Fig. 1, in the case of white display obtained by using a polymer dispersed liquid crystal and back scattering, if driving electrodes 2a are a sole metal pattern also serving as a reflection plate, a difference in back scattering ratio between the driving electrodes 2a and a non-driving display region 2b causes a display screen to have a non-uniform brightness distribution. To provide a uniform, bright display screen by preventing this phenomenon, a metal film made of the same material as the driving electrodes 2a is formed in the non-driving display region 2b. It is important that the pattern of the driving electrodes 2a and the non-driving display region 2b be made discontinuous. The pattern of the driving electrodes 2a and the non-driving display region 2b can be formed at the same time by photolithography and no additional manufacturing step is needed. To provide a display screen having a uniform brightness distribution, it is preferable that the gaps between the plurality of driving electrodes 2a and the gaps between the non-driving display region 2b and the driving electrodes 2a be as narrow as possible.

It is also possible to increase scattering light and decrease specular reflection light by forming asperities on a metal surface by subjecting it to chemical etching or sandblasting.

Referring to Fig. 6, a viewer of reflection light observes double images such that incident light A produces a light beam B due to backward reflection at the interface between a liquid crystal layer 5 and a transparent electrode 3 and a light beam B' coming from a virtual image of the transparent electrode 3 which image is distant downward from the surface of a reflection plate 2 by a thickness t of a transparent substrate 1. A distance n between the light beams B and B' is given by

$$n = 2 \times t \times \tan \theta \tag{1}$$

where t is the thickness of the transparent substrate 1, and $\theta$ is the angle formed by the incident light A and the perpendicular to the transparent substrate 1 which is what is called the incident angle and is also equal to a viewing angle of a person who watches the display device.

In the invention, as shown in Fig. 1, since the electrodes 2a for display also serves as a reflection plate, both parameters t and n in Equation (1) are 0, which means that the display device is free of the double image phenomenon.

Embodiment 1

An embodiment of the invention will be described in detail with reference to Figs. 1 and 2. Fig. 1 shows a reflection-type liquid crystal display device according to the embodiment, and Fig. 2 shows a reflection plate pattern according to the embodiment. Reference numeral 1 denotes a pair of transparent glass substrates opposed to each other; 2a, an aluminium pattern of signal electrodes also serving as a reflection plate; 2b, an aluminium reflection plate pattern in a non-driving display region; 3, transparent electrodes as scanning electrodes; and 4, a seal. A PN-LC 5 is provided in a cell gap formed between the pair of transparent substrates 1. The aluminium reflection plate patterns 2a and 2b were formed at a thickness of 0.20 µm by a commonly employed sputtering method while care was taken to avoid formation of pinholes. The aluminium pattern 3 was formed on the surface of the glass substrate 1 by sputtering under conditions which would provide metallic luster. The aluminium films 2a and 2b showed a high reflection efficiency of more than about 90% in the visible range.

The aluminium reflection plate patterns 2a and 2b are shown in Fig. 2. The pattern 2a serves as both of electrodes and a reflection plate, and the pattern 2b has the function of a reflection plate provided in the non-driving display region. The reflection plate patterns 2a and 2b were formed at the same time by patterning, by photolithography, a 0.20-µm-thick aluminium film formed by sputtering (described above). For the purpose of improving the reflection efficiency of the reflection plate patterns, not only the kind of metal material used but also the reflection area is an important factor. Therefore, the ratio of an electrode line width L to an electrode line interval S is essential. In this embodiment, the ratio L/S was set at 40; more specifically, L was 200 µm and S was 5 µm. Among similar parameters L' and S' relating to the pattern 2b in the non-driving display region may be set arbitrarily in accordance with the display area. The interval S' was set at 5 µm, which is the same as the driving electrode interval S.

The transparent conductive film 3 was made of commonly used ITO which is an oxide of an alloy obtained by mixing a small amount of tin into indium, and was formed by sputtering (or evaporation). The resistivity of ITO can be adjusted freely in accordance with the purpose. In this embodiment, the sheet resistance of the transparent conductive film 3 was set at 20 Ω/□.

A reflection-type liquid crystal display device was manufactured by injecting the PN-LC 5 into the above-configured reflection-type cell. As described above, the PN-LC 5 is a composite material obtained by subjecting, to mixing and dispersion, a TN liquid crystal and a polymeric resin that polymerises through upon illumination with ultraviolet light (PSI-1010 produced by Dainippon crosslinking Ink and Chemicals, Inc.).

The reflection-type liquid crystal display device of Fig. 1 manufactured in the above manner showed superior display performance, that is, it was very bright and free of the double image phenomenon.

In the invention, the metal material of the reflection plate patterns 2a and 2b is not limited to aluminium, and basically may be any metal material. In view of the arrangement of display colours, the brightness, the economy in manufacture, and other factors, other preferable metal materials include platinum, gold, silver, copper, nickel, cobalt, chromium, palladium, and rhodium. Table 1 shows a hue and brightness corresponding to a spectral reflectance characteristic of each of the above metal materials.

Table 1

| A1 | Wavelength (nm) | 380 | 450 | 500 | 550 | 600 | 650 |
|---|---|---|---|---|---|---|---|
| | Reflectance (%) | 92.5 | 92.2 | 91.8 | 91.6 | 91.1 | 90.3 |

Table 1   (continued)

| | | | | | | | |
|---|---|---|---|---|---|---|---|
| Pt | Wavelength (nm) | 431 | 527 | 656 | | | |
| | Reflectance (%) | 58.3 | 64.7 | 69.1 | | | |
| Au | Wavelength (nm) | 380 | 450 | 500 | 550 | 600 | 650 |
| | Reflectance (%) | 37.8 | 38.7 | 47.7 | 81.7 | 91.9 | 97.0 |
| Ag | Wavelength (nm) | 380 | 450 | 500 | 550 | 600 | 650 |
| | Reflectance (%) | 92.8 | 96.6 | 97.7 | 97.9 | 98.1 | 98.3 |
| Ni | Wavelength (nm) | 550 | 660 | | | | |
| | Reflectance (%) | 62.5 | 69.3 | | | | |
| Cr | Wavelength (nm) | 156 | 205 | 579 | | | |
| | Reflectance (%) | 7.7 | 28.9 | 69.8 | | | |
| Rh | Wavelength (nm) | 380 | 450 | 500 | 550 | 600 | 650 |
| | Reflectance (%) | 77.4 | 77.2 | 77.4 | 78.0 | 79.1 | 79.9 |
| Cu | Wavelength (nm) | 380 | 450 | 500 | 550 | 600 | 650 |
| | Reflectance (%) | 44.5 | 55.2 | 60.0 | 66.9 | 93.3 | 96.6 |

In the case of a certain kind of metals such as aluminium and silver, it is also possible to produce a soft reflecting surface which is different from a surface having a metallic luster by decreasing specular reflection light and increasing scattering light by forming minute asperities on the surface by oxidising it.

Further, it is possible to provide a varied reflecting surface which is different from a surface having metallic luster by greatly reducing specular reflection light by forming asperities on a metal surface by a mechanical surface treatment such as sandblasting.

Embodiment 2

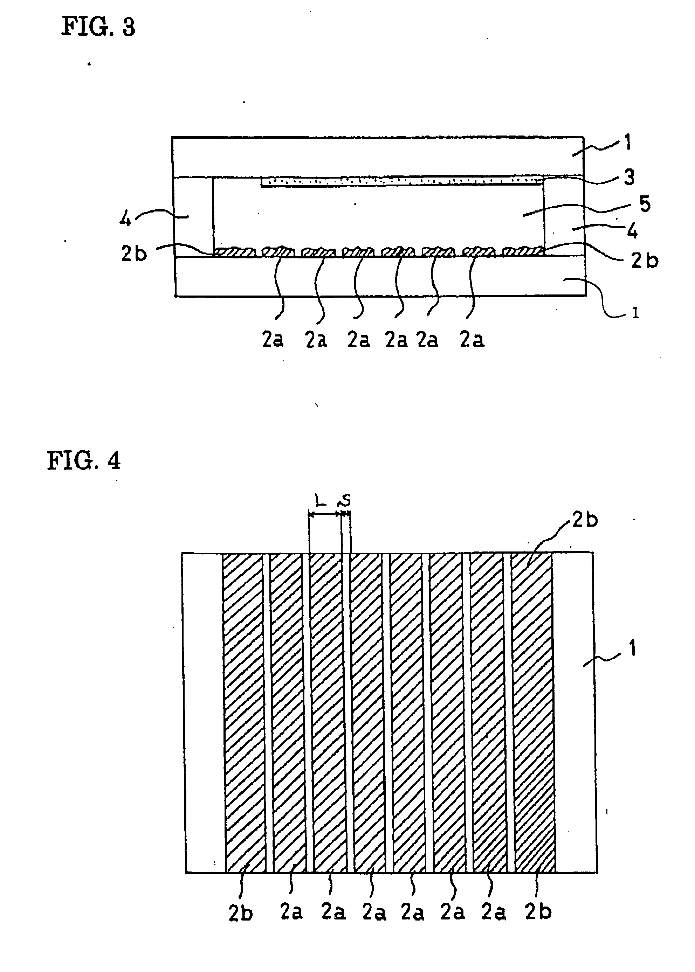

A second embodiment of the invention will be described below in detail with reference to Figs. 3 and 4. Fig. 3 is a schematic sectional view of a reflection-type liquid crystal display device according to the embodiment, and Fig. 4 shows a reflection plate pattern according to the embodiment. Reference numeral 1 denotes transparent glass substrates; 2a, aluminium signal electrodes also serving as a reflection plate; 2b, a reflection plate pattern formed in a non-driving display region; 3, transparent electrodes as scanning electrodes; 4, a seal; and 5, a PN-LC (PNM-152 produced by Dainippon Ink and Chemicals, Inc.).

As in the case of the first embodiment, the electrode and reflection plate patterns 2a and 2b were formed by forming a 0.30-μm-thick aluminium film by sputtering and then patterning it by photolithography with a ratio L/S = 95 μm/5 μm as shown in Fig. 4. Asperities were given to the surface of a resulting aluminium reflection plate patterns by sandblasting. To leave a certain level of front reflection light rather than provide a perfectly diffuse light, the sandblasting conditions were adjusted so that the asperities had a diameter of about 50 μm to about 100 μm which is larger than visible light wavelengths and a depth of about 2 μm (see Fig 5).

The electrode and reflection plate patterns 2a and 2b of this embodiment are those as obtained by disposing lead-out electrodes on both sides in a reflection-type passive matrix liquid crystal display device.

A reflection-type liquid crystal display device according to the embodiment as shown in Fig. 3 was manufactured by sealing the PN-LC 5 in the above-configured reflection-type cell. The display device showed superior display performance, that is, it was very bright and free of the double image phenomenon, as in the case of the first embodiment. Further, because specular reflection light from the image display area is reduced, a highly legible screen was obtained.

The material of the metal conductive electrodes 2a is not limited to aluminium, and may be selected from a wide range of materials in accordance with a desired hue and brightness. In the invention, as described in connection with the first embodiment, other recommendable metal materials include platinum, gold, silver, nickel, cobalt, chromium, palladium, and rhodium.

The reflection-type liquid crystal display device according to the invention is advantageous over the conventional one in the following points:

(1) A very bright reflection-type liquid crystal display device can be realised because the light reflection efficiency is improved by forming the electrode and reflection plate metal patterns 2a and 2b substantially over the entire inner surface of the transparent substrate 1 and the PN-LC 5 is used which requires no polarising plate.

(2) Because the electrode and reflection plate metal patterns 2a and 2b are formed on the inner surface of the transparent substrate 1, the liquid crystal driving electrodes can also serve as a reflecting plate, whereby the amount of material used can be reduced and the manufacturing process can be shortened. As a result, a low-price reflection-type liquid crystal display device can be realised.

(3) Because the electrode and reflection plate metal patterns 2a and 2b are formed on the inner surface of the transparent substrate 1, the double image phenomenon never occurs and hence a very clear, highly legible image can be displayed.

(4) Because the electrode and reflection plate metal patterns 2a and 2b are formed on the inner surface of the transparent substrate 1 and asperities are formed on its surface, specular reflection light is reduced and a highly legible reflection-type liquid crystal display device can be realised.

(5) The hue and the brightness of the driving display pixel region and those of the non-driving display region can be made different from each other by forming the electrode and reflection plate patterns 2a and 2b with different kinds of metals,

whereby the variety and the aesthetic appearance of the display screens can be increased or improved.

While preferred embodiments have been described, variations thereto will occur to those skilled in the art within the scope of the inventive concepts.

The aforegoing description has been given by way of example only and it will be appreciated by a person skilled in the art that modifications can be made without departing from the scope of the present invention.

## Claims

1. A reflection-type liquid crystal display device comprising:

   a transparent substrate (1);
   a transparent electrode (3) formed on the transparent substrate;
   an opposed substrate (1) opposed to the transparent substrate, and characterised by further comprising;
   electrodes (2a) also serving as a reflection plate formed on the opposed substrate in a driving display region;
   an electrode member (2b) irrelevant to a display operation and made of the same material as the electrodes, the electrode member being formed on the opposed substrate on the same plane as the electrodes in part of a display region excluding the driving display region so as to be discontinuous with the electrodes; and
   a polymer dispersed liquid crystal (5) interposed and held between the transparent substrate and the opposed substrate.

2. The reflection-type liquid crystal display device according to claim 1, wherein the electrodes and the electrode member contain at least one metal selected from the group consisting of aluminium, platinum, gold, silver, nickel, cobalt, chromium, palladium, and rhodium.

3. The reflection-type liquid crystal display device according to claim 1 or claim 2, wherein surfaces of the electrodes and the electrode member have asperities.

4. A reflection-type liquid crystal display device comprising:

   a transparent substrate (1);
   a transparent electrode (3) formed on the transparent substrate;
   a second substrate (1) opposed to the transparent substrate;
   a sealing member (4) for holding the transparent substrate and the second substrate so as to produce a space in between;
   a liquid crystal filling the space, and characterised by further comprising;
   display electrodes (2a) constituting display pixels and having a reflecting function; and
   a non-display electrode (2b) not constituting the display pixels and having a reflecting function, the non-display electrode being formed on the second substrate in a region inside the sealing member where the display electrodes are not formed, so as not to be electrically connected to the display electrodes.

5. The reflection-type liquid crystal display device according to claim 4, wherein the liquid crystal is a polymer dis-

persed liquid crystal.

FIG. 1

FIG. 2

FIG. 3

FIG. 4

## FIG. 5

## FIG. 6

PRIOR ART